# FASCICULE DE BREVET EUROPEEN

(11) **EP 0 648 691 B1**
(45) Date de publication et mention de la délivrance du brevet: **26.03.1997**
(21) Numéro de dépôt: 94490049.7
(22) Date de dépôt: 13.10.1994
(51) Int. Cl.: B65D 88/28, F16J 3/02

(54) **Joint destiné à assurer l'étanchéité entre au moins deux pièces à faces lisses**
Dichtung zur Sicherstellung der Dichtheit zwischen zumindest zwei Teilen mit glatten Flächen
Seal to safeguard the tightness between at least two parts with smooth faces

(30) Priorité: 13.10.1993 FR 9312390
(43) Date de publication de la demande: 19.04.1995
(73) Titulaire: SARL AMANTISS, F-59230 Saint Amand Les Eaux (Nord) (FR)
(72) Inventeur: Desrousseaux, Jean, F-59910 Bondues (FR); Tantart, Jean Marie, F-59230 Saint Amand Les Eaux (FR)
(74) Mandataire: Ecrepont, Robert

(56) Documents cités:
- EP-A- 0 122 440
- EP-A- 0 308 026
- DE-C- 834 306
- FR-A- 2 367 961
- US-A- 3 382 985
- US-A- 4 884 723

## Description

L'invention se rapporte à un joint destine à assurer l'étanchéité entre au moins deux pièces à faces lisses entre lesquelles se trouve pincée une partie plate d'une pièce réalisée dans un matériau souple et perméable à un fluide gazeux, tel de l'air.

L'invention intéresse plus particulièrement mais non limitativement un joint d'étanchéité entre au moins deux parties métalliques d'une trémie tronconique et une partie plate d'une garniture qui, placée dans le cône de déchargement de cette trémie, est réalisée en un tissu technique perméable aux fluides gazeux.

Dans le domaine des matériels de transport de produits pulvérulents, il est connu de mettre en oeuvre des réservoirs dont la base comporte au moins une trémie de déchargement constituée d'une pièce rigide de forme approximativement tronconique.

Classiquement, chaque trémie est équipée d'un dispositif de fluidification du matériau pulvérulent qu'elle contient et ce dispositif comprend, d'une part, une pièce qui, réalisée dans un nappe de matériau souple et perméable à l'air, recouvre étroitement la face interne de la trémie et, d'autre part, un moyen d'injection d'air comprimé entre la face interne de la trémie et la pièce de garniture.

La pièce de garniture est maintenue en position dans la trémie par différents éléments de fixation dont, à la périphérie de sa plus grande base, une collerette externe destinée à être pincée entre une portée et une bride qui sont de forme annulaire.

Cette collerette est équipée d'un joint destiné à entraver le passage de l'air entre les deux pièces à faces lisses entre lesquelles elle est pincée.

Les joints connus à cet effet (US-A-3.382.985) assurent imparfaitement leur fonction et ont une durée de vie notablement limitée.

En effet, ils comprennent un élément élastiquement déformable placé sur chaque face de la nappe uniquement au droit des faces lisses entre lesquelles elle doit être pincée.

Un résultat que l'invention vise à obtenir est un joint du type précité qui assure effectivement et durablement la fonction d'étanchéité recherchée.

A cet effet l'invention a pour objet un joint destiné à assurer l'étanchéité entre, d'une part, une partie plate d'une pièce réalisée dans une nappe de matériau souple et perméable à un fluide gazeux tel l'air et, d'autre part, au moins deux pièces à faces lisses entre lesquelles la pièce perméable à l'air doit être localement pincée aprés interposition d'éléments de joints, lequel joint est caractérisé en ce que :
- il est réalisé dans une feuille d'un matériau présentant,
   - un allongement avant rupture qui est compris entre cent quatre vingt dix et trois cent quatre vingt dix pour cent,
   - une dureté Shore qui est comprise entre quarante et quatre vingts, et
   - une résistance à la rupture par traction, comprise entre soixante et cent vingts kilogrammes par centimètre carré,
- il a une section transversale profilée en U, c'est à dire qu'il présente dans un plan approximativement perpendiculaire au bord périphérique de la partie plate, d'une part, deux branches constituées par une portion du matériau en feuille lesquelles, par une face s'appuient chacune contre l'une des faces opposées de cette partie plate et, d'autre part, une partie courbe qui, raccordant les deux branches présente quant à elle une face tournée vers le bord périphérique de la pièce plate,
- il a ses faces qui sont étroitement appliquées contre les faces de la partie plate et,
- il présente, entre les portions de matériau en feuille qui constituent les branches, des éléments de liaison qui, pour assurer leur fonction de liaison, traversent la partie plate de matériau perméable.

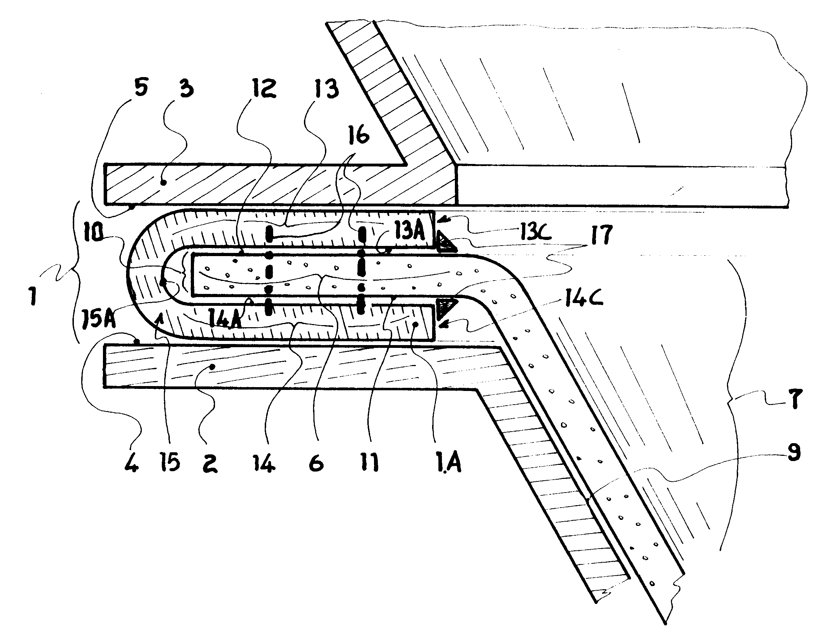

L'invention sera bien comprise à l'aide de la description ci-après faite à titre d'exemple non limitatif en regard du dessin ci-annexé qui représente schématiquement une vue en coupe longitudinale d'un joint selon l'invention.

En se reportant au dessin, on voit un joint 1 destiné à assurer l'étanchéité entre deux pièces supports 2, 3 présentant deux faces lisses 4, 5 tournées l'une vers l'autre et entre lesquelles se trouve pincée, aprés interposition d'éléments de joints, au moins une partie plate 6 d'une pièce 7 réalisée dans une nappe de matériau souple et perméable à un fluide gazeux tel de l'air (non représenté).

Par exemple, la pièce 7 est destinée à recouvrir étroitement la face interne 9 d'une trémie 2 (partiellement représentée).

Dans cet exemple, la partie 6 plate de la pièce 7 de garniture qui permet de la maintenir en position dans la trémie 2, consiste en une collerette 6 bordant extérieurement la plus grande base de cette pièce de garniture mais, quoiqu'il en soit, cette partie 6 plate présente un bord périphérique 10 et deux faces opposées 11, 12.

Les faces lisses 4, 5 des deux pièces supports 2, 3 forment des portées sensiblement annulaires pour le joint 1.

Classiquement, le joint 1 est réalisé en matériau 1A élastiquement déformable.

De manière remarquable, le joint 1 :
- est réalisé dans une feuille d'un matériau 1A présentant,
   - un allongement avant rupture qui est compris entre cent quatre vingt dix et trois cent quatre vingt dix pour cent,
   - une dureté Shore qui est comprise entre quarante et quatre vingts,
   - une résistance à la rupture par traction, comprise entre soixante et cent vingts kilogrammes par centimètre carré, et
- a une section transversale profilée en U, c'est à dire qu'il présente dans un plan approximativement perpendiculaire au bord périphérique de la partie 6 plate, d'une part, deux branches 13, 14 constituées par une portion du matériau en feuille lesquelles, par une face 13A, 14A, s'appuient chacune contre l'une des faces opposées 11, 12 de cette partie 6 plate et, d'autre part, une partie courbe 15 qui, raccordant les deux branches 13, 14, présente quant à elle une face 15A tournée vers le bord périphérique 10 de la pièce plate,
- a ses faces 13A, 14A qui sont étroitement appliquées contre les faces opposées de la partie plate 6 et,
- présente, entre les portions de matériau en feuille qui constituent les branches 13, 14, des éléments 16 de liaison qui, pour assurer leur fonction de liaison, traversent la partie 6 plate de matériau perméable.

Avantageusement, les éléments de liaison sont des fils de couture.

Bien que cela n'apparaissent pas de manière flagrante sur le dessin, on notera que l'ensemble des caractéristiques essentielles précitées, permet l'obtention des résultats annoncés pour le joint de l'invention.

De manière remarquable, d'une part, les portions de matériau en feuille réalisant chaque branche 13, 14 présentent un bord libre 13C, 14C constituant une face sensiblement cylindrique et, d'autre part, entre cette face cylindrique 13C, 14C et une portion circulaire de la face 11, 12 de la partie 6 plate contigüe, s'étend un élément 17 d'étanchéité tel un cordon d'étanchéité.

Cette dernière caractéristique a une incidence notable sur la durée de vie du joint car la présence de l'élément d'étanchéité interdit à tout matériau particulaire de s'immiscer dans sa structure et de venir altérer la liaison entre ses faces 13A, 14A et la partie 6 plate de matériau 1A perméable aux fluides gazeux.

Avantageusement, l'élément d'étanchéité 17 consiste en un cordon de matériau liant interposé entre le bord 13C, 14C et la face 11, 12 au droit de laquelle s'étend ce bord 13C, 14C.

Dans un forme préférée de réalisation, le matériau 1A constitutif du joint présente :
- un allongement avant rupture qui est compris entre deux cent cinquante et trois cent trente pour cent,
- une dureté Shore qui est comprise entre cinquante cinq et soixante cinq,
- une résistance à la rupture par traction, comprise entre quatre vingts et cent dix kilogrammes par centimètre carré.

Ces dernières caractéristiques optimisent la fonction d'étanchéité du joint.

Avantageusement, le matériau 1A constitutif du joint présente :
- un allongement avant rupture qui est de deux cent quatre vingt dix pour cent,
- une dureté Shore qui est de soixante,
- une résistance à la rupture par traction qui est de quatre vingt dix kilogrammes par centimètre carré.

De préférence, le matériau 1A constitutif du joint est un caoutchouc synthétique et précisément un matériau à base de polychloroprène.

Ces caractéristiques finales sont celles du matériau préférentiellement utilisé.

## Revendications

1. Joint (1) destiné à assurer l'étanchéité entre deux pièces supports (2, 3) présentant deux faces lisses (4, 5) tournées l'une vers l'autre et entre lesquelles se trouve pincée, aprés interposition d'éléments de joints, au moins une partie plate (6) d'une pièce (7) réalisée dans une nappe de matériau souple et perméable à un fluide gazeux tel de l'air,
ce joint en matériau élastiquement déformable étant **CARACTERISE** en ce que :
- il est réalisé dans une feuille d'un matériau (1A) présentant,
• un allongement avant rupture qui est compris entre cent quatre vingt dix et trois cent quatre vingt dix pour cent,
• une dureté Shore qui est comprise entre quarante et quatre vingts,
• une résistance à la rupture par traction, comprise entre soixante et cent vingts kilogrammes par centimètre carré,
- il a une section transversale profilée en U, c'est à dire qu'il présente dans un plan approximativement perpendiculaire au bord périphérique (10) de la partie (6) plate, d'une part, deux branches (13, 14) constituées par une portion du matériau en feuille lesquelles, par une face (13A, 14A), s'appuient chacune contre l'une des faces opposées (11, 12) de cette partie (6) plate et, d'autre part, une partie courbe (15) qui, raccordant les deux branches (13, 14), présente quant à elle une face (15A) tournée vers le bord périphérique (10) de la pièce plate,
- il a ses faces (13A, 14A) qui sont étroitement appliquées contre les faces de la partie plate et
- il présente, entre les portions de matériau en feuille qui constituent les branches (13, 14), des éléments (16) de liaison qui, pour assurer leur fonction de liaison, traversent la partie (6) plate de matériau perméable.

2. Joint selon la revendication 1 **caractérisé** en ce que d'une part, les portions de matériau en feuille réalisant chaque branche (13, 14) présentent un bord libre (13C, 14C) constituant une face sensiblement cylindrique et, d'autre part, entre cette face cylindrique (13C, 14C) et une portion circulaire de la face (11, 12) de la partie (6) plate contigue, s'étend un élément (17) d'étanchéité.

3. Joint selon la revendication 2 **caractérisé** en ce que l'élément d'étanchéité (17) consiste en un cordon de matériau liant interposé entre le bord (13C, 14C) et la face (11, 12) au droit de laquelle s'étend ce bord (13C, 14C).

4. Joint selon l'une quelconque des revendications 1 à 3 **caractérisé** en ce que le matériau (1A) constitutif du joint présente :
- un allongement avant rupture qui est compris entre deux cent cinquante et trois cent trente pour cent,
- une dureté Shore qui est comprise entre cinquante cinq et soixante cinq, et
- une résistance à la rupture par traction, comprise entre quatre vingts et cent dix kilogrammes par centimètre carré.

5. Joint selon l'une quelconque des revendications 1 à 4 **caractérisé** en ce que le matériau (1A) constitutif du joint présente :
- un allongement avant rupture qui est de deux cent quatre vingt dix pour cent,
- une dureté Shore qui est de soixante, et
- une résistance à la rupture par traction qui est de quatre vingt dix kilogrammes par centimètre carré.

6. Joint selon l'une quelconque des revendications 1 à 5 **caractérisé** en ce que le matériau (1A) constitutif du joint est un caoutchouc synthétique et précisément un matériau à base de polychloroprène.

## Claims

1. A seal (1) for ensuring tightness between two supporting parts (2, 3) having two smooth surfaces (4, 5) which face one another and between which at least one flat portion (6) of a part (7) is clamped after interposition of sealing elements, the part (7) being formed from a sheet of flexible material permeable to a gaseous medium such as air, the said seal of elastically deformable material being characterised in that:
- it is formed from a sheet of a material (1A) having
• an elongation before rupture of between 190 and 390 per cent,
• a Shore hardness of between 40 and 80,
• a tensile strength of between 60 and 120 kg/cm²,
- it has a U-shaped cross-section, namely it has, in a plane substantially perpendicular to the peripheral edge (10) of the flat portion (6), two arms (13, 14) formed by part of the sheet material and each resting by means of a surface (13A, 14A) against one of the opposing surfaces (11, 12) of the said flat portion (6), and a curved portion (15) connecting the two arms (13, 14) and having a surface (15A) facing the peripheral edge (10) of the flat portion,
- its surfaces (13A, 14A) rest closely against the surfaces of the flat portion, and
- it has, between the sheet-material parts forming the arms (13, 14), connecting members (16) extending through the flat portion (6) of permeable material in order to ensure their connecting function.

2. A seal according to claim 1, characterised in that firstly the sheet-material parts forming each arm (13, 14) have a free edge (13C, 14C) forming a substantially cylindrical surface, and secondly a sealing element (17) extends between the cylindrical surface (13C, 14C) and a circular part of the surface (11, 12) of the adjacent flat portion (6).

3. A seal according to claim 2, characterised in that the sealing element (17) comprises a band of flexible material interposed between the edge (13C, 14C) and the surface (11, 12) at right angles to which the said edge (13C, 14C) extends.

4. A seal according to any one of claims 1 to 3, characterised in that the material (1A) forming the seal has:
• an elongation before rupture of between 250 and 330 per cent,
• a Shore hardness of between 55 and 65, and
• a tensile strength of between 80 and 110 kg/cm².

5. A seal according to any one of claims 1 to 4, characterised in that the material (1A) forming the seal has:
• an elongation before rupture of 290 per cent,
• a Shore hardness of 60, and
• a tensile strength of 90 kg/cm².

6. A seal according to any one of claims 1 to 5, characterised in that the material (1A) forming the seal is a synthetic rubber and, in particular, a polychloroprene-based material.

## Patentansprüche

1. Dichtung (1) zur Sicherstellung der Dichtheit zwischen zwei Stützteilen mit zwei glatten Flächen (4, 5), welche einander zugekehrt sind und zwischen welchen nach Anordnung von Dichtungselementen dazwischen mindestens ein flacher Abschnitt (6) eines Teiles (7) festgeklemmt ist, welches aus einem Stück flächigen elastischen Werkstoff besteht, der für ein gasförmiges Strömungsmittel, beispielsweise Luft, durchlässig ist,
wobei diese Dichtung aus elastisch verformbarem Werkstoff dadurch **GEKENNZEICHNET** ist, daß:
- sie aus einer Folie aus einem Werkstoff (1A) besteht, welche
• eine Bruchdehnung zwischen einhundertundneunzig und dreihundertundneunzig Prozent,
• eine Shore-Härte zwischen vierzig und achtzig, und
• eine Zugfestigkeit zwischen sechzig und einhundertundzwanzig kg/cm² besitzt,
- daß sie einen Querschnitt mit U-Profil aufweist, d.h. in einer zur umlaufenden Kante (10) des flachen Abschnitts (6) in etwa senkrechten Ebene zum einen zwei Schenke) (13, 14) besitzt, die aus einem Teil des Folienmaterials bestehen und mit einer Fläche (13A, 14A) jeweils gegen eine der gegenüberliegenden Flächen (11, 12) dieses flachen Abschnitts (6) anliegen, und andererseits einen gebogenen Abschnitt (15), welcher die beiden Schenkel (13, 14) miteinander verbindet und seinerseits eine Fläche (15A) aufweist, die der umlaufenden Kante (10) des flachen Teiles zugewandt ist,
- daß ihre Flächen (13A, 14A) fest gegen die Flächen des flachen Abschnitts angelegt sind, und
- daß sie zwischen den die Schenkel (13, 14) bildenden Abschnitten Verbindungselemente (16) aufweist, welche zur Sicherstellung ihrer Verbindungsfunktion durch den flachen Abschnitt (6) aus durchlässigem Werkstoff hindurchgeführt sind.

2. Dichtung nach Anspruch 1, **dadurch gekennzeichnet**, daß einerseits die Abschnitte aus Folienmaterial, aus welchen jeder Schenkel (13, 14) ausgeführt ist, einen freien Rand (13C, 14C) aufweist, welcher eine im wesentlichen zylindrische Fläche bildet, und andererseits sich zwischen dieser zylindrischen Flache (13C, 14C) und einem kreisrunden Abschnitt der anschließenden Fläche (11, 12) des flachen Abschnitts (6) ein Dichtelement (17) erstreckt.

3. Dichtung nach Anspruch 2, **dadurch gekennzeichnet**, daß das Dichtelement (17) aus einer Litze aus Bindermaterial besteht, welche zwischen die Kante (13C, 14C) und die Fläche (11, 12) an der Stelle eingelegt ist, von welcher aus sich diese Kante (13C, 14C) erstreckt.

4. Dichtung nach einem der Ansprüche 1 bis 3, **dadurch gekennzeichnet**, daß der Werkstoff (1A), aus welchem die Dichtung besteht,
• eine Bruchdehnung zwischen zweihundertundfünfzig und dreihundertunddreißig Prozent,
• eine Shore-Härte zwischen fünfundfünfzig und fünfundsechzig, und
• eine Zugfestigkeit zwischen achtzig und einhundertundzehn kg/cm² aufweist.

5. Dichtung nach einem der Ansprüche 1 bis 4, **dadurch gekennzeichnet**, daß der Werkstoff (1A), aus welchem die Dichtung besteht,
• eine Bruchdehnung von zweihundertundachtzig Prozent,
• eine Shore-Härte von sechzig, und
• eine Zugfestigkeit von neunzig kg/cm² aufweist.

6. Dichtung nach einem der Ansprüche 1 bis 5, **dadurch gekennzeichnet**, daß der Werkstoff, aus welchem die Dichtung besteht, ein synthetisch hergestellter Gummi und insbesondere ein Werkstoff auf Polychloroprenbasis ist.
